# EUROPEAN PATENT SPECIFICATION

(11) **EP 0 386 989 B1**
(45) Date of publication and mention of the grant of the patent: **20.05.1998**
(21) Application number: 90302346.3
(22) Date of filing: 06.03.1990
(51) Int. Cl.: H02M 7/12, H04N 3/18, H04N 5/63

(54) **A switch mode power supply with burst mode standby operation**
Schaltnetzteil mit Burst-Mode-Bereitschaftsbetrieb
Alimentation à découpage avec fonctionnement en mode rafale en mode d'attente

(30) Priority: 07.03.1989 GB 8905172; 07.03.1989 GB 8905173; 19.10.1989 US 424357
(43) Date of publication of application: 12.09.1990
(73) Proprietor: RCA Thomson Licensing Corporation, Princeton, NJ 08540 (US)
(72) Inventor: Leonardi, Giovanni Michele, CH-6745 Giornico (CH)
(74) Representative: Ahrens, Thomas, Dipl.-Phys.

(56) References cited:
- EP-A- 0 332 095
- US-A- 4 524 411

## Description

The invention relates to switch-mode power supplies.

In a typical switch mode power supply (SMPS) of a television receiver the AC mains supply voltage is coupled to a bridge rectifier. An unregulated direct current (DC) input supply voltage is produced. A pulse width modulator controls the duty cycle of a chopper transistor switch that applies the unregulated supply voltage across a primary winding of a flyback transformer. A flyback voltage at a frequency that is determined by the modulator is developed at a secondary winding of the transformer and is rectified to produce DC output supply voltages such as a B+ voltage that energizes a horizontal deflection circuit of the television receiver, and a voltage that energizes a remote control unit.

During normal operation, the DC output supply voltages are regulated by the pulse width modulator in a negative feedback manner. During standby operation, the SMPS is required to generate the DC output supply voltage that energizes the remote control unit. However, most other stages of the television receiver are inoperative and do not draw supply currents. Consequently, the average value of the duty cycle of the chopper transistor may have to be substantially lower during standby than during normal operation.

Because of, for example, storage time limitation in the chopper transistor, it may not be possible to reduce the length of the conduction interval in a given cycle below a minimum level. Thus, in order to maintain the average value of the duty cycle low, it may be desirable to operate the chopper transistor in an intermittent or burst mode, during standby. During standby, a long dead time interval occurs between consecutively occurring burst mode operation intervals. Only during the burst mode operation interval does switching operation occur in the chopper transistor. The result is that each of the conduction intervals is of a sufficient length.

EP-A-332095 discloses a switch-mode power supply, which operates in the burst mode during overload and during startup (which is also an overload condition). In EP-A-332095 an input supply voltage is coupled via a primary winding of a flyback transformer to a collector of a chopper transistor switch that operates at a given frequency. During a portion of each period when the chopper transistor switch is conductive, a second switch applies a short-circuit across a secondary winding of the transformer at a controllable instant that causes the emitter current of the chopper transistor switch to increase at a significantly higher rate. When the emitter current exceeds a predetermined threshold level, a one-shot arrangement is triggered. Consequently, a pulse is produced that turns off the chopper transistor switch and that maintains it non-conductive for the duration of the pulse. A flyback pulse produced in a winding of the transformer is rectified to produce a DC output supply voltage. The length of the interval when the chopper transistor switch is conductive is controlled by the second switch in accordance with the level of the output supply voltage in a negative feedback manner for regulating the output supply voltage.

In accordance with the present invention, there is provided a switch mode power supply, according to claim 1, comprising in particular :
a source of input supply voltage;
a transformer having a first winding coupled to said input supply voltage;
first switching means coupled to said first winding for generating a switching signal in said transformer that is coupled back in a positive feedback manner to said first switching means to form an oscillator that oscillates continuously during a run-mode of operation;
means coupled to said input supply voltage and responsive to an output signal of said oscillator for generating from said input supply voltage an output supply voltage by a switching operation controlled in accordance with said oscillator output signal;
means responsive to said output supply voltage and coupled to said oscillator for modulating said oscillator output signal during said run mode of operation in a negative feedback manner thereby regulating said output supply voltage;
means responsive to a standby-mode/run-mode control signal and coupled to said oscillator for disabling in a standby mode of operation the continuous oscillations in said oscillator; and
means responsive to a signal at a first frequency for initiating a burst mode switching operation in said first switching means that is repetitive at a frequency determined by said first frequency when the continuous oscillations are disabled.

In the Drawing :
FIGURE 1 illustrates a power supply embodying an aspect of the invention;
FIGURES 2a-2d illustrate waveforms useful for explaining the run mode operation of the circuit of FIGURE 1 when loading varies;
FIGURES 3a-3g illustrate additional waveforms useful for explaining the run mode operation of the circuit of FIGURE 1 under a constant loading condition;
FIGURE 4 illustrates the way of the isolation transformers that are used in the circuit of FIGURE 1 are constructed;
FIGURES 5a-5d illustrate waveforms useful for explaining a standby operation of the power supply of FIGURE 1;
FIGURES 6a-6d illustrate transient waveforms useful for explaining the operation of the circuit of FIGURE 1 during start-up;
FIGURE 7 illustrates a modification of the circuit of FIGURE 1 that increases output power;
FIGURE 8 provides performance data, in a table form, of the circuit of FIGURE 1 and also, for comparison purposes, of a conventional power supply; and
FIGURE 9 provides additional performance data, in a table form, of the circuit of FIGURE 1 and also, for comparison purposes, of a conventional power supply.

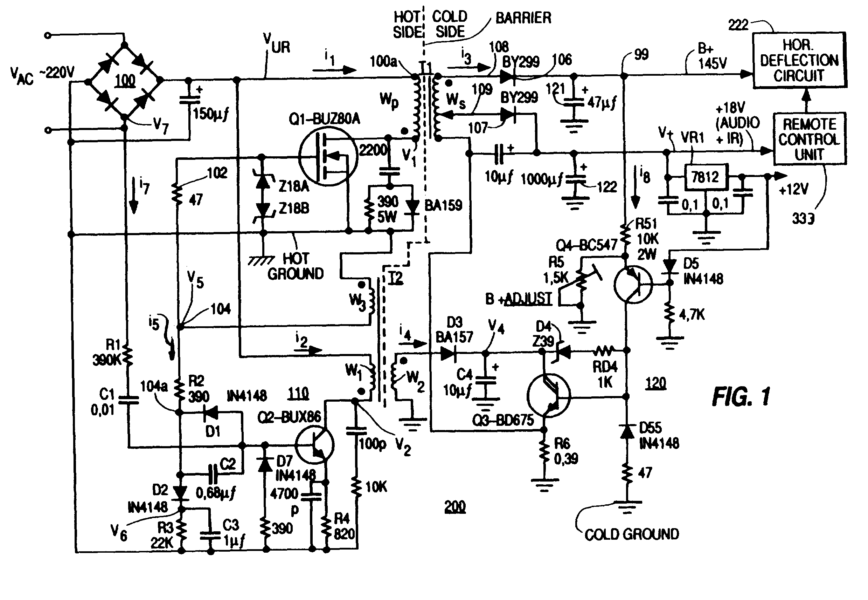

FIGURE 1 illustrates a switch-mode power supply (SMPS) 200, embodying an aspect of the invention. SMPS 200 produces a B+ output supply voltage of +145 volts that is used for energizing, for example, a deflection circuit of a television receiver, not shown, and an output supply voltage V+ of +18 volts that are both regulated. A mains supply voltage V_{AC} is rectified in a bridge rectifier 100 to produce an unregulated voltage V_{UR}. A primary winding Wₚ of a flyback isolation transformer T1 is coupled between a terminal 100a, where voltage V_{UR} is developed, and a drain electrode of a power chopper metal oxide semiconductor (MOS) field effect transistor Q1.

The source electrode of MOS transistor Q1 of FIGURE 1 is coupled to a common conductor, referred to herein as "hot" ground. The gate electrode of transistor Q1 is coupled via a coupling resistor 102 to a terminal 104 where a pulse-width modulated signal V₅ is produced. Signal V₅ produces a switching operation in transistor Q1. A secondary winding W₃ of an isolation transformer T2, across which signal V₅ is developed, is coupled between terminal 104 and the hot ground conductor. A pair of back-to-back zener diodes Z18A and Z18B provide gate protection in transistor Q1. Winding W₃, winding Wₚ, transistor Q1 and signal V₅ are at potentials that are referenced to the hot ground conductor.

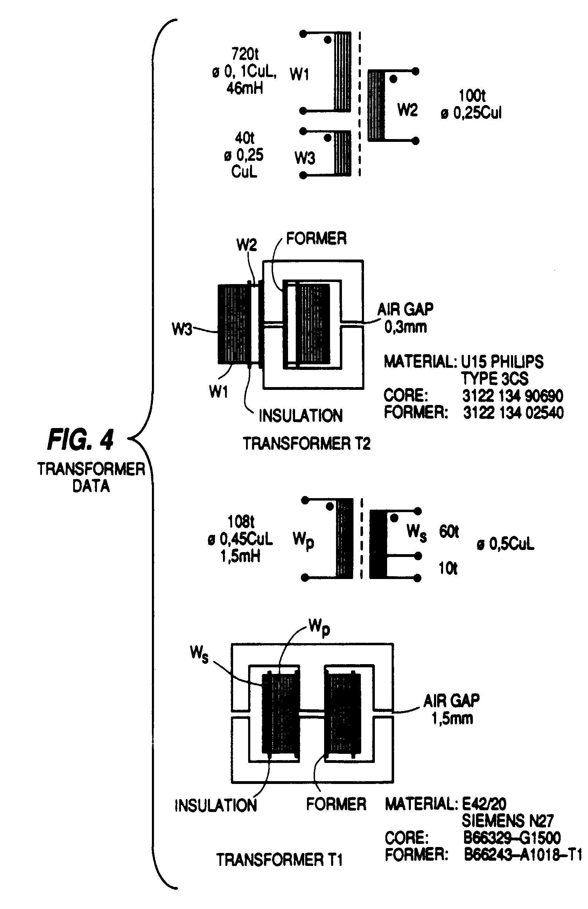

Transformers T1 and T2 are constructed in a manner shown in FIGURE 4. Similar symbols and numerals in FIGURES 1 and 4 indicate similar items or functions.

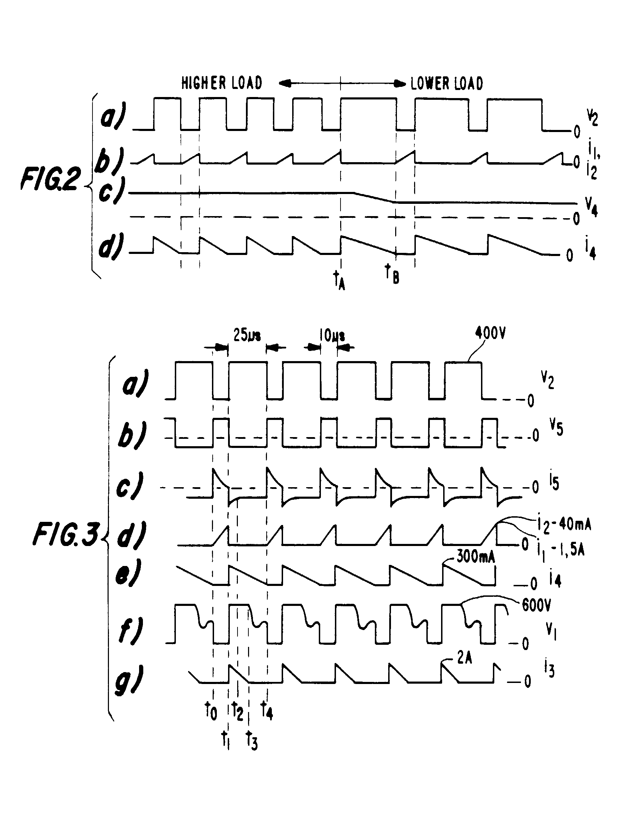

FIGURES 3a-3g illustrate waveforms useful for explaining the normal steady state operation or run mode of the SMPS of FIGURE 1 under a constant loading condition. Similar symbols and numerals in FIGURES 1 and 3a-3g indicate similar items or functions.

During, for example, interval t₀-t₁ of FIGURE 3b of a corresponding given cycle or period, the voltage of pulse signal V₅ is positive relative to the hot ground conductor for maintaining transistor Q1 of FIGURE 1 conductive during interval t₀-t₁ of FIGURE 3b. Consequently, a current i₁ in winding Wₚ of FIGURE 1 is upramping, as shown in FIGURE 3d, during interval t₀-t₁. Therefore, quantity of inductive energy is stored in transformer T1 of FIGURE 1. At time t₁ of FIGURE 3d, transistor Q1 of FIGURE 1 becomes nonconductive.

After transistor Q1 becomes nonconductive, the inductive energy stored in winding Wₚ is transferred, by flyback transformer action, to a secondary winding Wₛ of transformer T1. Flyback pulses developed at terminals 108 and 109 of winding W_{S} are rectified by diodes 106 and 107, respectively, and filtered in capacitors 121 and 122, respectively, for producing DC voltages B+ and V+, respectively, that are all referenced to a second common conductor, referred to herein as "cold" ground. The cold ground is conductively isolated from the hot ground conductor, with respect to an electrical shock hazard, by transformers T1 and T2. Transistor Q1, transformer T1 and diodes 106 and 107 form an output stage of the SMPS.

A pulse-width modulator of SMPS 200 includes a blocking oscillator 110, embodying an aspect of the invention, that produces switching signal V₅ for controlling the switching operation of transistor Q1. Oscillator 110 includes a switching transistor Q2 having a base electrode that is also controlled or switched by signal V₅. Winding W₃ of transformer T2 provides positive feedback in oscillator 110 by developing signal V₅. Transformer T2 has a primary winding W₁ that is coupled between voltage V_{UR} and the collector of transistor Q2 such that winding W₁ is referenced to the hot ground conductor. A secondary winding W₂ of transformer T2, that is referenced to the cold ground conductor, is conductively coupled to a diode D3 of a control circuit 120, embodying another aspect of the invention, that is also referenced to the cold ground conductor.

The cathode of diode D3 is coupled to the cold ground conductor via a capacitor C4. As explained later on, a DC control voltage V₄ developed across capacitor C4 varies the nonconduction time or duty cycle of transistor Q2 during each period.

A capacitor C2 is coupled between the base electrode of transistor Q2 and a terminal 104a. A resistor R2 is coupled between terminal 104a and terminal 104 where signal V₅ is developed. During interval t₀-t₁ of FIGURE 3b, a current i₅ of FIGURE 3c is produced in resistor R2 of FIGURE 1 that is coupled between terminals 104 and 104a. Current i₅ of FIGURE 3c, that is produced by signal V₅ of FIGURE 3b, charges capacitor C2 of FIGURE 1 in a manner that turns on transistor Q2, during interval t₀-t₁ of FIGURE 3d.

During normal operation, when transistor Q2 of FIGURE 1 is conductive, a current i₂ of FIGURE 3d in winding W₁ of FIGURE 1 increases linearly, until an emitter voltage-of of transistor Q2, that is developed across an emitter resistor R4, is sufficiently high to initiate a rapid turn-off operation in transistor Q2. Feedback resistor R4 is coupled between the emitter of transistor Q2 and the hot ground conductor. Resistor R4 causes a gradual decrease of current i₅ of FIGURE 3c when transistor Q2 of FIGURE 1 is conductive until transistor Q2 ceases to conduct at time t₁ of FIGURE 3c. Resistor R4 of FIGURE 1 also serves to optimize the switching condition and to provide current protection in transistor Q2. The result is that the voltage across winding W₁ reverses polarity. The turn-off operation is rapid because of the positive feedback caused by winding W₃ in developing signal V₅.

As indicated before, winding W₃ provides pulse drive signal V₅ that also controls transistor Q1. The conduction interval in each cycle of transistors Q1 and Q2 remains substantially constant or unaffected by loading. Therefore, advantageously, the stored energy in transformer T1, when transistor Q1 becomes nonconductive, is substantially constant for a given level of voltage V_{UR}. However, the conduction interval may vary when a variation in voltage V_{UR} occurs.

When transistor Q2 ceases to conduct, a downramping current i₄ of FIGURE 3e is produced in winding W₂ of transformer T2 of FIGURE 1. Current i₄ causes diode D3 of FIGURE 1 to be conductive and charges capacitor C4, during interval t₁-t₄ of FIGURE 3e. For a given level of voltage V_{UR} of FIGURE 1, and for a given duty cycle of transistor Q2, the charge added to capacitor C4 is the same in each cycle. During interval t₁-t₄, control voltage V₄ of FIGURE 1, except for the forward voltage drop in diode D3, is substantially developed across winding W₂.

Voltage V₄ determines the length of interval t₁-t₄ of FIGURE 3e that is required to deplete the magnetic energy stored in transformer T₂ of FIGURE 1. When, at time t₄ of FIGURE 3e, current i₄ becomes zero, the polarity of signal V₅ of FIGURE 3b changes as a result of resonance oscillations in the windings of transformer T2. Therefore, positive current i₅ of FIGURE 3c is generated. As explained before, when current i₅ is positive, it causes transistors Q1 and Q2 to be conductive.

During the aforementioned nonconduction interval t₁-t₄ of FIGURE 3b of transistors Q1 and Q2 of FIGURE 1, signal V₅ is negative, as shown during interval t₁-t₄ of FIGURE 3b. Consequently, a current in the opposite polarity, as shown in FIGURES 3c, flows through capacitor C2 of FIGURE 1, during interval t₁-t₂ of FIGURE 3c, and through diode D1 of FIGURE 1 during interval t₂-t₄ of FIGURE 3c. The resulting charge in capacitor C2 of FIGURE 1 produces a voltage in capacitor C2 of such a polarity that tends to rapidly turn on transistor Q2, when, at time t₄ of FIGURES 3b, signal V₅ reverses polarity.

Control circuit 120 of FIGURE 1, that is referenced to the cold ground conductor, controls the duty cycle of oscillator 110 by varying control voltage V₄ across capacitor C4. A transistor Q4 of circuit 120 is coupled in a common base amplifier configuration. The base voltage of transistor Q4 is obtained via a temperature compensating forward biased diode D5 from a +12V voltage regulator VR1. Regulator VR1 is energized by voltage V+.

A fixed resistor R51 is coupled between the emitter of transistor Q4 and voltage B+. As a result of the common base operation, a current i₈ in resistor R51 is proportional to voltage B+. An adjustable resistor R5 that is used for adjusting the level of voltage B+ is coupled between the cold ground conductor and a junction terminal between the emitter of transistor Q4 and resistor R51. Resistor R51 is used to determine the level of the current in transistor Q4. Thus, an adjustable preset portion of current i₈ flows to the cold ground conductor through resistor R5, and an error component of current i₈ flows through the emitter of transistor Q4.

The collector current of transistor Q4 is coupled to the base of a transistor Q3 for controlling a collector current of transistor Q3. The collector of transistor Q3 forming a high output impedance is coupled to the junction between capacitor C4 and diode D3. When transistor Q2 becomes nonconductive the stored energy in transformer T2 causes current i₄ to flow via diode D3 into capacitor C4, as indicated before. Regulation of the power supply is achieved by controlling control voltage V₄. Voltage V₄ is controlled by controlling the loading across winding W₂ of transformer T2 by means of transistor Q3.

The collector current of transistor Q3, that forms a current source having a high output impedance, is coupled to capacitor C4 that operates as a flywheel. In steady state, the amount of charge that is added to capacitor C4 during interval t₁-t₄ of FIGURE 3e is equal to the amount of charge that is removed by transistor Q3 from capacitor C4 in a given period t₀-t₄.

FIGURES 2a-2d illustrate waveforms useful for explaining the regulation operation of the SMPS of FIGURE 1 under different loading conditions. Similar symbols and numerals in FIGURES 1, 2a-2d and 3a-3g indicate similar items or functions.

After, for example, time t_{A} of FIGURES 2a-2d, the power supply current loading across capacitor 121 of FIGURE 1 decreases and voltage B+ tends to increase. As a result of the increase in voltage B+, transistor Q3 conducts a higher level of collector current. Therefore, voltage V₄ of FIGURE 2c across capacitor C4 of FIGURE 1 becomes smaller. Therefore, a longer time is required in each period for removing the stored inductive energy from transformer T2 of blocking oscillator 110, after transistor Q2 becomes nonconductive. It follows that the length of the interval, t_{A}-t_{B}, of FIGURE 2a, in a given cycle, when transistor Q2 of oscillator 110 of FIGURE 1 is nonconductive, increases under reduced loading condition. The result is that the duty cycle, that is the ratio between the "on" time to the "off" time of transistor Q1, decreases, as required for proper regulation.

In steady state, voltage V₄ is stabilized at a level that causes an equilibrium between the charging and discharging currents of capacitor C4. The increase in voltage B+ is capable of causing, advantageously, a proportionally greater change in voltage V₄, as a result of amplification and current integration of the collector current of transistor Q3 in capacitor C4. In a transient condition, as long as voltage B+ is, for example, greater than +145 volts, voltage V₄ will decrease.

The result is that voltage V₄ of FIGURE 1 tends to change in a manner that tends to nullify the aforementioned tendency of voltage B+ to increase under reduced loading. Thus, regulation is obtained in a negative feedback manner. In the extreme case, a short circuit across winding W₂ could inhibit oscillation in oscillator 110 thus providing, advantageously, an inherent fail safe feature, as described later on.

Conversely, a tendency of voltage B+ to decrease will increase the duty cycle of transistors Q1 and Q2 in a manner that provides regulation. Thus, the nonconduction interval of transistor Q1 varies with current loading at a terminal 99 where voltage B+ is developed.

Processing voltage B+ for producing control voltage V₄ is accomplished, advantageously, in a DC coupled signal path for improving error sensing. Also, a change in voltage B+ is capable of causing a proportionally greater change in voltage V₄, thus improving error sensitivity. Only after the error in voltage B+ is amplified, the amplified error contained in DC coupled voltage V₄ is transformer or AC coupled to effectuate pulse-width modulation. The combination of such features improves the regulation of voltage B+.

Another way by which an arrangement similar to control circuit 120 is used for regulation purposes is shown and explained in a copending U.S. Patent Application 424,353 entitled, A SYNCHRONIZED SWITCH-MODE POWER SUPPLY, filed concurrently. Voltage that is produced similarly to voltage V₄ of FIGURE 1 is transformer coupled to a sawtooth generator. The transformer coupled voltage varies a sawtooth signal that is used for producing a pulse-width modulated control signal.

A zener diode D4 is coupled in series with a resistor RD4, between the base and collector electrodes of transistor Q3. Zener diode D4, advantageously, limits voltage V₄ to about 39 volts, which limits the frequency of oscillator 110, or the minimum cut-off time of transistors Q2 and Q1. In this way, the maximum power transferred to the load is, advantageously, limited for providing over-current protection.

For safe operation, it may be desirable to have secondary current i₃ in winding W₅ decay to zero before transistor Q1 is turned on again. This means that the decay time of current i₃ should be, preferably, shorter than that of current i₄ of blocking oscillator 110. This condition can be met by a proper choice of the primary inductance of transformer T2 and of the value of zener diode D4.

Standby operation is initiated by operating SMPS 200 in a low power operation mode. The low power operation mode occurs when the power demand from the SMPS drops below 20-30 watts. For example, within horizontal deflection circuit 222 a horizontal oscillator, not shown, that is controlled by a remote control unit 333 ceases operating during standby. Therefore, a horizontal deflection output stage in deflection circuit 222, that is energized by voltage B+, ceases operation as well. Consequently, the loading at terminal 99, where voltage B+ is produced, is reduced. It follows that voltage B+ and the error current in transistor Q4 tend to increase. Therefore, transistor Q3 saturates, causing a near short circuit across winding W₂,of transformer T2, that causes voltage V₄ to be approximately zero throughout the standby mode of operation. Consequently, unlike in the run-mode of operation, a positive pulse of signal V₅ cannot be generated by resonance oscillations in transformer T2. It follows that the regenerative feedback loop is prevented from initiating the turn on transistor Q2. Consequently, continuous oscillation cannot be sustained.

In accordance with an aspect of the invention, transistor Q2 is periodically triggered into switching in a burst mode operation by an upramping portion of a half wave rectified voltage of a signal V₇. Signal V₇ occurs at the mains frequency, such as 50Hz. Signal V₇ is derived from bridge rectifier 100 and is applied to the base of transistor Q2 via a series arrangement of a resistor R₁ and a capacitor C1. The series arrangement operates as a differentiator that produces a current i₇.

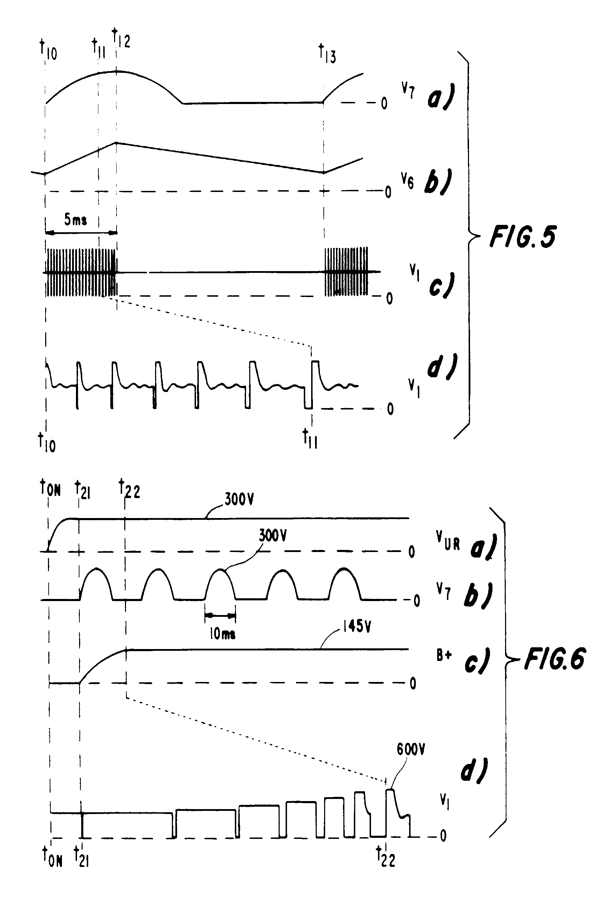

FIGURES 5a-5d illustrate waveforms during standby operation, indicating that burst mode switching operation of oscillator 110 occurs during an interval t₁₀-t₁₂ followed by a dead time interval t₁₂-t₁₃, when no trigger pulses of signal V₅ are present in the blocking oscillator. Similar symbols and numerals in FIGURES 1 and 5a-5d indicate similar items or functions.

A parallel arrangement of a capacitor C3 of FIGURE 1 and a resistor R3 is coupled in series with a diode D2 to form an arrangement that is coupled between the hot ground conductor and junction terminal 104a, between capacitor C2 and resistor R2. A diode D1 is coupled in parallel with capacitor C2.

During normal run mode operation, capacitor C3 remains charged to a constant voltage V₆ by the positive voltage pulses of signal V₅ that is developed in winding W₃ each time transistor Q2 is conductive. Therefore, capacitor C3 is decoupled from the positive feedback signal path and has no effect on circuit operation. During standby operation, capacitor C3 discharges during the long inactive periods or dead time, as shown by voltage V₆ between times t₁₂-t₁₃ in FIGURE 5b.

Immediately after time t₁₀ of FIGURE 5a of a given interval t₁₀-t₁₃, current i₇ of FIGURE 1, produced by voltage differentiation in capacitor C1, increases from zero to a maximum positive value. As a result, a base current, produced in transistor Q2, causes transistor Q2 to be conductive. When transistor Q2 becomes conductive, a positive pulse of signal V₅ is produced in winding W₃ that maintains transistors Q1 and Q2 conductive.

Similarly to normal run mode operation that was described before, transistor Q2 remains conductive until the magnitude of the base current of transistor Q2 is insufficient to maintain transistor Q2 in saturation, as collector current i₂ is upramping. Then, collector voltage V₂ increases and signal V₅ decreases. The result is that by means of positive feedback transistor Q2 is turned-off.

The voltage across capacitor C2 produces negative current i₅ that discharges capacitor C2 via a diode D7 and that maintains transistor Q2 in cut-off. As long as a magnitude of negative current i₅ is larger than that of positive current i₇, the base current in transistor Q2 is zero and transistor Q2 remains nonconductive. When the magnitude of negative current i5 of FIGURE 1 becomes smaller than current i₇, transistor Q2 is turned on again and positive current i₅ is generated.

During a substantial portion of a given conduction interval of transistor Q2, current i₅ flows entirely via capacitor C2 to form the base current of transistor Q2. Because collector current i₂ is upramping, the emitter voltage of transistor Q2 increases in an upramping manner, causing the voltage at the anode of diode D2 to increase. When the voltage at the anode of diode D2 becomes sufficiently positive, diode D2 begins conducting. Therefore, a substantial portion of current i₅ is diverted by capacitor C3 from the base of transistor Q2. The result is that the base current becomes insufficient to sustain the collector current of transistor Q2. Therefore, the positive feedback signal path causes transistor Q2 to turn-off. Thus, the peak amplitude of current i₂ is determined by the level of voltage V₆ across capacitor C3.

During interval t₁₀-t₁₂ of FIGURES 5a-5d, capacitor C3 of FIGURE 1 is coupled via diode D2 to the positive feedback signal path and charged by positive current i₅. Therefore, voltage V₆ of FIGURE 5b becomes progressively larger.

In accordance with a further aspect of the invention, voltage V₆ that becomes progressively larger causes the conduction interval during each cycle that occurs in interval t₁₀-t₁₂ of FIGURES 5a-5d to become progressively longer. Consequently, the peak amplitudes and the pulse widths of currents i₁ and i₂ of FIGURE 1 increase progressively.

During a corresponding nonconduction portion of each cycle that occurs in interval t₁₀-t₁₂ of FIGURES 5a-5d, capacitor C2 of FIGURE 1 is discharged via a diode D7 and resistor R2. The length of the nonconduction interval of transistor Q2 in each cycle is determined by the time required for discharging capacitor C2 to such a level that causes a magnitude of negative current i₅ to be smaller than that of positive current i₇.

In accordance with an embodiment of an aspect of the invention, the nonconduction interval becomes progressively longer because capacitor C2 is charged to a progressively higher voltage and also because the magnitude of current i₇ becomes progressively smaller. Therefore, positive base current will begin flowing in the base of transistor Q2 after progressively longer nonconduction intervals. The result is that the switching frequency during the burst mode interval will vary or decrease progressively.

At time t₁₂ of FIGURE 5a current i₇ is zero. Therefore, burst mode operation that occurred during interval t₁₀-t₁₂ cannot continue and the long dead time interval t₁₂-t₁₃ occurs in which no switching operation happens. At time t₁₃, positive current i₇ is generated again and a subsequent burst mode switching interval occurs in transistors Q1 and Q2.

During the burst mode interval t₁₀-t₁₂ of FIGURE 5d, the length of the conduction interval in each cycle increases progressively, as explained before. Such operation may be referred to by the term soft start operation. Because of the soft start operation, capacitors, for example, of SMPS 200 are charged or discharged in a gradual manner.

In accordance with an embodiment of another aspect of the invention, voltage V₆ of capacitor C3, by being lower than during run mode operation, maintains the switching frequency of transistors Q1 and Q2 of FIGURE 1 above the audible range in SMPS 200 of FIGURE 1 throughout interval t₁₀-t₁₂ of FIGURE 5a. As a result of the soft start operation during standby and of the high switching frequency during standby, noise produced by parasitic mechanical vibrations in inductors and transformers of SMPS 200 of FIGURE 1 is, advantageously, substantially reduced.

The burst mode operation during interval t₁₀-t₁₂ of FIGURE 5c produces voltage V+ of FIGURE 1 at a sufficient level to enable the operation of remote control unit 333 of FIGURE 1, during standby. Because of the burst mode operation, the energy consumed in SMPS 200 is maintained substantially lower, at about 6 watts, than during normal run mode operation.

To generate voltage V+ at the required level for operating remote control unit 333, a corresponding average duty cycle of transistors Q1 and Q2, that is substantially lower than during run mode, is required. The length of the conduction interval in transistor Q1, for example, should be longer than the storage time of transistor Q1. Accordingly, by operating in the burst mode, the conduction interval of transistor Q1 in each cycle can be maintained longer for obtaining the required lower average duty cycle than if continuous switching operation had occurred during standby. Such continuous switching operation in transistors Q1 and Q2 occurs during normal run mode operation without the occurrence of dead time intervals such as interval t₁₂-t₁₃ of FIGURE 5d.

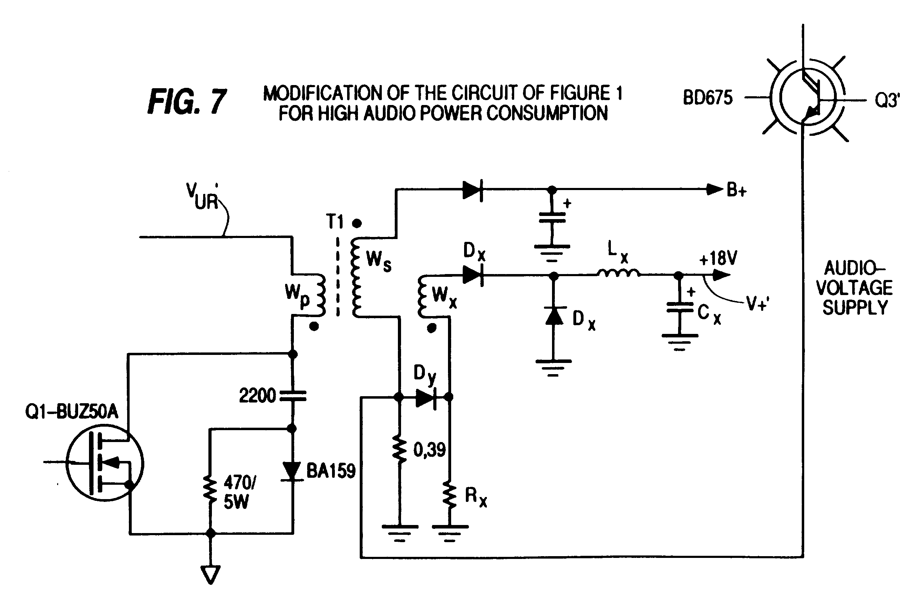

The SMPS has also a soft start-up feature, as will now be explained with the aid of waveforms in FIGURES 6a-6d. Similar symbols and numerals in FIGURES 1, 5a-5d and 6a-6d indicate similar items or functions. The start-up mode is similar to the stand-by operation. When the power supply is first turned on, capacitors C3 and C4 are discharged and there is no forward bias on the base of transistor Q2. Oscillation is initiated by feeding a small portion of of rectified AC supply signal V₇ to the base of transistor Q2. As illustrated by FIGURE 6d, the oscillator duty cycle is initially very short, or the interval in each cycle when transistor Q2 is nonconductive is long, because winding W2 of transformer T2 is heavily loaded by the discharged capacitor C4. The charge on capacitors C3 and C4, and voltage B+ build up gradually over a period of about 15msec, as shown in FIGURE 6c. Normal operation begins following this slow build up.

In case of a short circuit at output terminal 99 of FIGURE 1, for example, SMPS 200 goes into an intermittent mode operation, in a similar manner to the stand-by operation mode. For example, if capacitor C121 of FIGURE 1 is short circuited, the increase in current i₃ flowing through secondary winding Wₛ of transformer T1 causes a higher negative bias to develop across a resistor R6 that is coupled to the emitter of transistor Q3. Base current then flows into transistor Q3 through a diode D55, causing transistor Q3 to saturate and to clamp its collector voltage V4 to ground. The consequent loading of transformer T2 causes SMPS 200 to operate in the intermittent burst mode as described for stand-by mode operation.

The low voltage supply portion of SMPS 200 that produces voltage V+ may be arranged to operate as a forward converter in case of, for example, high audio power requirements. FIGURE 7 shows a modification of the circuit of FIGURE 1 for obtaining forward converter operation. A resistor Rx and a diode Dy of FIGURE 7 serve as an overload protection, as explained later on. Similar symbols and numerals in FIGURES 1 and 7 indicate similar items or functions. Should an overload occur when the modification shown in FIGURE 7 is employed to provide the high power audio supply, resistor Rx senses the excess current and provides negative bias to the emitter of transistor Q3.

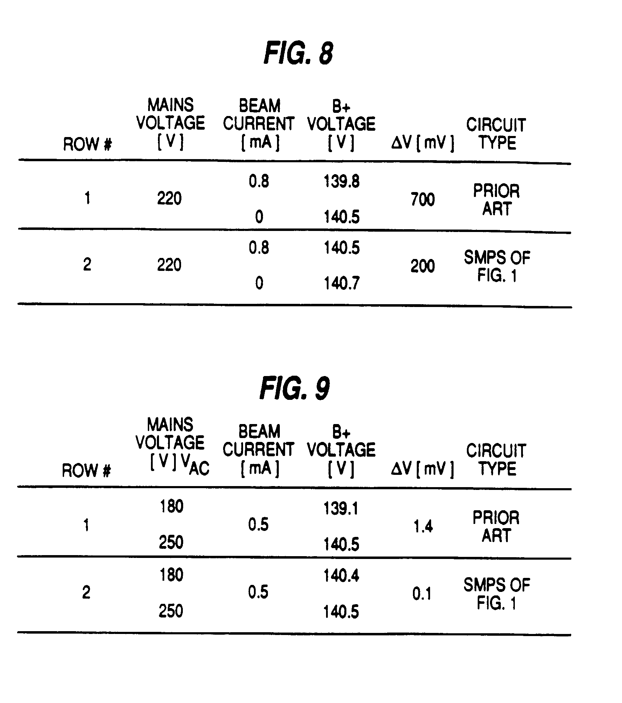

FIGURE 8 shows, in a table form, the variation of voltage B+ caused by a corresponding variation in a beam current flowing in an ultor electrode, not shown, of a television receiver. Voltage B+ energizes the deflection circuit output stage, not shown, for producing the ultor voltage and the beam current. FIGURE 9 shows, in a table form, a variation of voltage B+ caused by a variation of mains supply voltage V_{AC}.

For comparison purposes, row No. 1 in each of the tables of FIGURES 8 and 9 provides data obtained when a conventional prior art SMPS using an integrated circuit TDA4601 control circuit and a power transformer Orega No. V4937700 is utilized. Row No. 2 in each of the tables of FIGURES 8 and 9 provides data obtained when the unmodified SMPS of FIGURE 1 is utilized. As can be seen, the performance of SMPS 200 of FIGURE 1 is superior.

## Claims

1. A switch mode power supply for generating an output supply voltage (B⁺) during both a standby-mode and a run-mode of operation, comprising :
a source of input supply voltage (V_{UR});
a transformer (T2) having a first winding (W₁) coupled to said input supply voltage (V_{UR});
first switching means (Q2) coupled to said first winding (W₁) for generating a switching signal (i₂) in said transformer (T2) that is coupled back in a positive feedback manner to said first switching means (Q2) to form an oscillator (110) that oscillates continuously during the run-mode of operation;
means (Q1,T1) coupled to said input supply voltage (V_{UR}) and responsive to an output signal (V₅) of said oscillator (110) for generating from said input supply voltage (V_{uR}) an output supply voltage (B+) by a switching operation of a switch (Q₁) controlled in accordance with said oscillator output signal (V₅) ;
means (Q4, Q3, T2) responsive to said output supply voltage (B+) and coupled to said oscillator (110) for modulating said oscillator output signal (V₅) during said run mode of operation in a negative feedback manner thereby regulating said output supply voltage (B+);
means responsive to a standby-mode/run-mode control signal (from 333) and coupled to said oscillator (110) for disabling in a standby mode of operation the continuous oscillations in said oscillator; and
means (D2, C2) responsive to a mains power supply signal for initiating a burst mode switching operation during said standby-mode of operation in said first switching means (Q2) that is repetitive at a frequency determined by the frequency of said mains power supply when the continuous oscillations are disabled.

2. A switch mode power supply according to Claim 1 and further comprising :
a capacitor (C3); and
second switching means (D2) responsive to said standby-mode/run-mode control signal for coupling said capacitor (C3) to said positive feedback signal path to maintain a switching frequency of said first switching means (Q2) above an audible range during said burst mode of operation and for decoupling said capacitor (C3) from said positive feedback signal path to prevent said capacitor from affecting the oscillation (110) frequency of said oscillator during said run-mode of operation.

3. A power supply according to Claim 2 characterized by, a resistor (R3) coupled to said capacitor (C3) for discharging said capacitor (C3) during dead time intervals when no burst mode switching operation occurs in said standby mode of operation.

4. A power supply according to Claim 3 characterized in that said second switching means comprises a diode (D2) that is coupled between a second winding (W₃) of said transformer (T2) and said capacitor.

5. A power supply according to Claim 4 characterized in that a current that charges said capacitor (C3) via said diode (D2) develops a voltage in said capacitor (C3) that is ramping in a first direction during a given burst-mode interval and wherein said resistor (R3) causes said capacitor (C3) voltage to ramp in an opposite direction during said dead time intervals.

6. A power supply according to Claim 1, wherein the said source comprises means for generating the input supply voltage (V_{UR}) from AC mains voltage at the said first frequency.

7. A power supply according to claim 6 characterized in that said modulating means (Q3,Q4) comprises a capacitor (C4) for generating a control voltage (V₄) in said capacitor (C4) having a value that is indicative of a duty cycle of said first switching means (Q2) required for regulating said output supply voltage (B+), and wherein said modulating means further comprises second switching means (Q3) that is responsive to said switching current (i₂) for coupling said capacitor (C4) to a second winding (W₂) to apply said control voltage (V₄) in said capacitor (C4) to said second winding (W₂) during a flyback interval of a given switching cycle of said first switching means (Q2); and
means (Q4) coupled to said capacitor (C4) and responsive to said standby-mode/run-mode control signal (from 333) for controlling said control voltage (V₄) in a manner that disables said regenerative positive feedback signal path during said standby mode of operation.

8. A power supply according to Claim 6 characterized in that said modulating means (Q3, Q4) forms a DC coupled signal path between a terminal (99) where said output supply voltage (B+) is developed and said second winding (W₂) of said transformer (T2).

## Patentansprüche

1. Schaltnetzteil zur Erzeugung einer Ausgangs-Versorgungsspannung (B+) sowohl während eines Bereitschaftsbetriebs als auch während eines Normalbetriebs umfassend:
eine Quelle für eine Eingangs-Versorgungsspannung (V_{UR}) ;
einen Transformator (T2) mit einer ersten Wicklung (W₁), der die Eingangs-Versorgungsspannung (V_{UR}) zugeführt wird;
erste Schaltmittel (Q2), die mit der ersten Wicklung (W₁) verbunden sind, um ein Schaltsignal (i₂) in dem Transformator (T2) zu erzeugen, das in positiver Rückkopplungsweise zu den ersten Schaltmitteln (Q2) rückgekoppelt ist, um einen Oszillator (110) zu bilden, der während des Normalbetriebs kontinuierlich schwingt;
Mittel (Q1, T1), denen die Eingangs-Versorgungsspannung (V_{UR}) zugeführt wird, und die auf ein Ausgangssignal (V₅) des Oszillators (110) ansprechen, um von der Eingangs-Versorgungsspannung (V_{UR}) eine Ausgangs-Versorgungsspannung (B+) durch eine Schaltoperation eines Schalters (Q1) zu erzeugen, der gemäß dem Oszillator-Ausgangssignal (V₅) gesteuert wird;
Mittel (Q4, Q3, T2), die auf die Ausgangs-Versorgungsspannung (B+) ansprechen und mit dem Oszillator (110) verbunden sind, um das Oszillator-Ausgangssignal (V₅) während des Normalbetriebs in einer negativen Rückkopplungsweise zu modulieren und dadurch die Ausgangs-Versorgungsspannung (B+) zu regeln;
Mittel, die auf ein Bereitschaftsbetriebs-/Normalbetriebs-Steuersignal (von 333) ansprechen und mit dem Oszillator (110) verbunden sind, um in einem Bereitschaftsbetrieb die kontinuierlichen Schwingungen in dem Oszillator abzuschalten; und
Mittel (D2, C2), die auf ein Netz-Stromversorgungssignal ansprechen, um während des Bereitschaftsbetriebs eine Burst-Mode-Schaltoperation in den ersten Schaltmitteln (Q2) auszulösen, die sich mit einer Frequenz wiederholt, die durch die Frequenz der Netz-Stromversorgung bestimmt ist, wenn die kontinuierlichen Schwingungen abgeschaltet sind.

2. Schaltnetzteil nach Anspruch 1, das ferner umfaßt:
einen Kondensator (C3); und
zweite Schaltmittel (D2), die auf das Bereitschaftsbetriebs-/Normalbetriebs-Steuersignal ansprechen, um den Kondensator (C3) mit dem positiven Rückkopplungs-Signalweg zu koppeln, um eine Schaltfrequenz der ersten Schaltmittel (Q2) oberhalb eines hörbaren Bereichs während des Burst-Mode-Betriebs aufrechtzuerhalten und um den Kondensator (C3) von dem positiven Rückkopplungs-Signalweg abzukoppeln, um zu verhindern, daß der Kondensator die Schwingungsfrequenz des Oszillators (110) während des Normalbetriebs beeinflußt.

3. Schaltnetzteil nach Anspruch 2, gekennzeichnet durch einen Widerstand (R3), der mit dem Kondensator (C3) verbunden ist, um den Kondensator (C3) während Totzeitintervallen zu entladen, wenn im Bereitschaftsbetrieb keine Burst-Mode-Schaltoperation erfolgt.

4. Schaltnetzteil nach Anspruch 3, dadurch gekennzeichnet, daß die zweiten Schaltmittel eine Diode (D2) umfassen, die zwischen einer zweiten Wicklung (W₃) des Transformators (T2) und dem Kondensator liegt.

5. Schaltnetzteil nach Anspruch 4, dadurch gekennzeichnet, daß ein Strom, der den Kondensator (C3) über die Diode (D2) auflädt, eine Spannung in dem Kondensator (C3) erzeugt, die in einer ersten Richtung während eines gegebenen Burst-Mode-Intervalls ansteigt, und wobei der Widerstand (R3) bewirkt, daß die Spannung am Kondensator (C3) während der Totzeitintervalle in entgegengesetzter Richtung ansteigt.

6. Schaltnetzteil nach Anspruch 1, bei dem die Quelle Mittel umfaßt, um die Eingangs-Versorgungsspannung (V_{UR}) aus der Netz-Wechselspannung mit der ersten Frequenz zu erzeugen.

7. Schaltnetzteil nach Anspruch 6, dadurch gekennzeichnet, daß die Modulationsmittel (Q3, Q4) einen Kondensator (C4) umfassen, um in dem Kondensator (C4) eine Steuerspannung (V₄) zu erzeugen, deren Wert ein Tastverhältnis der ersten Schaltmittel (Q2) anzeigt, das zur Regelung der Ausgangs-Versorgungsspannung (B+) erforderlich ist, und wobei die Modulationsmittel ferner zweite Schaltmittel (Q3) umfassen, die auf den Schaltstrom (i₂) zur Verbindung des Kondensators (C4) mit einer zweiten Wicklung (W₂) ansprechen, um die Steuerspannung (V₄) in dem Kondensator (C4) der zweiten Wicklung (W₂) während eines Rücklauf-Intervalls eines gegebenen Schaltzyklus der ersten Schaltmittel (Q2) zuzuführen; und
Mittel (Q4), die mit dem Kondensator (C4) verbunden sind und auf das Bereitschafts-/Normalbetriebs-Steuersignal (von 333) ansprechen, um die Steuerspannung (V₄) in einer Weise zu steuern, die den Signalweg für die positive Rückkopplung während des Bereitschaftsbetriebes abschaltet.

8. Schaltnetzteil nach Anspruch 6, dadurch gekennzeichnet, daß die Modulationsmittel (Q3, Q4) einen gleichstromgekoppelten Signalweg zwischen einem Anschluß (99), an dem die Ausgangs-Versorgungsspannung (B+) erzeugt wird, und der zweiten Wicklung (W₂) des Transformators (T2) bilden.

## Revendications

1. Alimentation à découpage servant à générer une tension d'alimentation de sortie (B+) à la fois en mode normal et en mode veille, comportant :
une source de tension d'alimentation d'entrée (V_{uR})
un transformateur (T2) ayant un premier enroulement (W₁) raccordé à ladite tension d'alimentation d'entrée (V_{UR}),
un premier dispositif de commutation (Q2) raccordé audit premier enroulement (W₁) et générant un signal commuté (i₂) dans ledit transformateur (T2) couplé par réaction au dit premier dispositif de commutation (Q2) de manière à former un oscillateur (110) qui oscille de manière continue pendant le mode normal de fonctionnement,
un dispositif (Q1, T1) raccordé à ladite tension d'alimentation d'entrée (V_{UR}), réagissant au signal de sortie (V₅) dudit oscillateur (110) et générant à partir de la tension d'alimentation d'entrée (V_{UR}) une tension d'alimentation de sortie (B+) par commutation d'un commutateur (Q1) commandé conformément au signal de sortie dudit oscillateur (V₅),
un dispositif (Q4, Q3, T2) réagissant à ladite tension d'alimentation de sortie (B+) et couplé au dit oscillateur (110), modulant ledit signal de sortie de l'oscillateur (V₅) par contre-réaction pendant le mode de fonctionnement normal, régulant ainsi ladite tension d'alimentation de sortie (B+),
un dispositif réagissant au signal de commande mode normal/mode veille (provenant de 333) et couplé audit oscillateur (110), inhibant les oscillations continues dudit oscillateur en mode veille, et
un dispositif (D2, C2) réagissant au signal de l'alimentation secteur et initialisant un fonctionnement en mode salve dudit premier dispositif de commutation (Q2) pendant ledit mode de veille, se répétant à une fréquence déterminée par la fréquence de ladite alimentation secteur lorsque les oscillations continues sont inhibées.

2. Une alimentation à découpage selon la revendication 1 et comportant en outre,
un condensateur (C3) et
un second dispositif de commutation (D2) réagissant au dit signal de commande mode veille/mode normal, couplant ledit condensateur (C3) au dit trajet du signal de réaction de manière à maintenir une fréquence de commutation dudit premier dispositif de commutation (Q2) au-dessus de la gamme audible, pendant ledit fonctionnement en mode salve ; et découplant ledit condensateur (C3) dudit trajet du signal de réaction pour éviter que ledit condensateur n'affecte la fréquence d'oscillation dudit oscillateur (110) pendant le fonctionnement en mode normal.

3. Une alimentation selon la revendication 2, caractérisée par une résistance (R3) raccordée audit condensateur C3) et déchargeant ledit condensateur (C3) pendant les intervalles de temps mort où aucun fonctionnement en mode salve ne se produit dans ledit mode veille.

4. Une alimentation selon la revendication 3, caractérisée par le fait que ledit second dispositif de commutation comporte une diode (D2) insérée entre un second enroulement (W₃) dudit transformateur (T2) et ledit condensateur.

5. Une alimentation selon la revendication 4, caractérisée par le fait que le courant de charge dudit condensateur (C3) traversant ladite diode (D2) fait apparaître dans ledit condensateur (C3) une tension qui varie progressivement dans un sens pendant un intervalle de fonctionnement en mode salve, et où ladite résistance (R3) provoque une variation en sens opposé de la tension dudit condensateur (C3) pendant lesdits intervalles de temps mort.

6. Une alimentation selon la revendication 1, où ladite source comporte un dispositif générant la tension d'alimentation d'entrée (V_{UR}) à partir de la tension alternative du secteur à ladite première fréquence.

7. Une alimentation selon la revendication 6, caractérisée par le fait que ledit dispositif de modulation (Q3, Q4) comporte un condensateur (C4) générant une tension de commande (V₄) dans ledit condensateur (C4) dont la valeur indique le rapport cyclique dudit premier dispositif de commutation (Q2), nécessaire pour la régulation de ladite tension d'alimentation de sortie (B+), et où ledit dispositif de modulation comporte en outre un second dispositif de commutation (Q3) réagissant au dit courant de commutation (i₂), couplant ledit condensateur (C4) à un second enroulement (W₂), de manière à appliquer ladite tension de commande (V₄) dans ledit condensateur (C4) au dit second enroulement (W₂) pendant l'intervalle de retour d'un cycle donné de commutation dudit premier dispositif de commutation (Q2), et
un dispositif (Q4) raccordé audit condensateur (C4), réagissant au dit signal de commande mode veille/mode normal (provenant de 333) et contrôlant ladite tension de commande (V₄), de telle manière que le trajet dudit signal de réaction soit inhibé pendant ledit mode veille.

8. Une alimentation selon la revendication 6 caractérisée par le fait que ledit dispositif de modulation (Q3, Q4) forme un trajet de signal couplé en continu entre la borne (99) où apparaît ladite tension d'alimentation de sortie (B+) et ledit second enroulement (W₂) dudit transformateur (T2).
